# EUROPEAN PATENT APPLICATION

(11) **EP 1 433 675 A1**
(43) Date of publication of application: **30.06.2004**
(21) Application number: 02258933.7
(22) Date of filing: 24.12.2002
(51) Int. Cl.: B60R 22/46, B60R 22/34

(54) **A pretensioner of a seatbelt retractor**

(71) Applicant: Delphi Automotive Systems Sungwoo Corporation, Wonju-shi, Kangwon-do 220-800 (KR)
(72) Inventor: Kim, Seung Man, Eunpyung-ku, Seoul 122-874 (KR)
(74) Representative: Rees, Alexander Ellison

(57) **Abstract**

A pretensioner of a seatbelt retractor (100) adapts a load limiter to take at least two safety countermeasures upon the abnormal of a vehicle, which comprises a clutch (90) including a circular groove (91) portion formed around the periphery thereof to allow a predetermined length of the cable (56) to be wound thereon, a plurality of second coupling projections (94) each having a right-angled surface toward one direction and a slanted surface toward the other direction adjacent to around the periphery of one side surface thereof, at least three coupling groove portions (95) cut out at one side in a right-angle and at the other side in a slant angle and a fixing groove (96) formed to fix the other end (57) of a cable (56) and upper and lower stoppers (101,103) respectively and integrally formed in a diametric line on the upper and lower portions of the circumference thereof to each other; a clutch portion (82) includes at least three second coupling projectors (86) forming a slanted surface at one side and a right-angled surface at other side for cooperating with the coupling groove portions to allow the clutch to be reversely rotated and upper and lower guiders (88,89) respectively and integrally formed in a diametric line on the upper and lower inner portions of the second chamber (82) to guide the clutch to be rotated in a winding direction; and the load limiter (30) including a plurality of third coupling means and concaved grooves formed at the positions facing to the first coupling projectors on one side surface of the reel and the load control including a torsion bar (31) and a disk (32) for cooperating with the reel (20).

## Description

### Background of the Invention

The invention is related to providing a pretensioner of a seatbelt retractor, and particularly, to providing a pretensioner of a seatbelt retractor for adapting a load limiter to performing the safety operation of two steps.

### Prior Art

Generally, much effort has been given to the basic performance of a car such as a comfortable feeling during driving, speed, as well as on safety apparatus for protecting passengers. Especially, it is well known that a safety belt retractor has been significantly developed in its safety performance in respect to passengers. As a part of the safety counter measures, a load limiter and a pretensioner has been provided with a seatbelt retractor to enhance the inherent property thereof.

The conventional load limiter includes a torsion bar constituted as a reel shaft, which is excessively twisted to rotate a reel by a predetermined number or broken due to the webbing acceleration, when the loading or weight of a belted occupant in an emergency situation of vehicles' collision or sudden deceleration is applied to a web. It relieves the sudden stop of the webbing as well as the impact of the occupant against the web to promote the safety of the belted occupant. A typical technology of a load limiter is disclosed in Korean Patent No. 299273 and its corresponding US Patent No. 6,237,869 assigned to this Applicant.

The pretensioner reversely rotates a retractor reel to pull a predetermined length of the safety belt by a power of a power generator using a Pyrotechnic for generating gas or other powers upon the sudden deceleration of the car, for example the crash or accident. But, it is not certain that the pretensioner already developed would have been performed to comply with the inherent purpose of restraining the passenger from the seat. The reason is why the technical difficulties exist in adjusting the rewinding length of the safety belt according to the generating power due to the separation of the pretensioner from the generating apparatus.

In order to resolve these problems, a typical technology of a pretensioner is disclosed in Korean Patent No. 348163 and its corresponding UK Unexamined Patent Publication No. 2,363,764 assigned to this Applicant which are entitled "Seatbelt Pretensioner" or "Pretensioner Integrated with a Power Transferring Apparatus for a Seatbelt Retractor".

The pretensioner comprises a housing receiving one end portion of a cylinder and permitting a pyrotechnic force generating means to be supported on the upper portion of an U-shaped bracket; a force transmitting portion including an arm positioned in a first chamber of the housing to be extended out of the cylinder, a pulley rotatably mounted on the axes of the branched end of the arm and a cable passed through the pulley to transfer the force to a clutch disk; and a pretensioner positioned in a second chamber adjacent to the first chamber, which comprises the clutch disk and a clutch portion, in which the clutch disk includes a circular groove portion formed around the periphery thereof to allow a predetermined length of the cable to be wound thereon, a plurality of first coupling projectors each having a right-angled surface toward one direction and a slanted surface toward the other direction adjacent to around the periphery of one side surface thereof, at least three coupling groove portions cut out at one side in a right-angle and at the other side in a slant angle and a fixing groove formed to fix the other end of the cable.

The pretensioner enables a number of rotations of gear coupled clutch disk more than anticipated compared with a relatively shorter traveling distance of the arm and pulley, thereby enhancing the force transmitting performance.

Herein, it is noted that the load limiter and the pretensioner are differently operated with respect to each other in their function respects, in which the former acts to loose the tensioned web, and the latter serves to pull up the web, so they can have a complementary relationship to each other. Therefore, their ideal combined configuration that the load limiter is operated followed by the pretensioner is very desirable. Then, in the combined configuration, it is very important to enhance the operation reliability of the pretensioner in order to secure the smooth operation of the load limiter. Under these concepts, the invention can't help being accomplished.

Accordingly, an object of the invention is to provide a pretensioner of a seatbelt retractor improving a force transmitting performance of a clutch device combined with a pyrotechnic force-generating device, which is mounted on one side surface of the seatbelt retractor.

Another object of the invention is to provide a pretensioner of a seatbelt retractor harmonizing the operation range of a clutch device coupled with a pyrotechnic force-generating device to that of a load limiter.

Another object of the invention is to provide a pretensioner of a seatbelt retractor permitting a center shaft of a reel to be cooperated with a clutch device coupled with a pyrotechnic force-generating device and a load limiter.

### SUMMARY OF THE INVENTION

A seatbelt retractor comprising a reel rotatably mounted on an U-shaped bracket to perform the webbing operating of a web; a locking portion for restraining the rotating of the reel cooperating with latches formed on one side of the reel in an abnormal status of a vehicle; a pyrotechnic force generating means including a force generating portion for moving a piston downward in a cylinder vertically extended from one side of a horizontal tube with a force generated upon the explosion of a propelant charged cartridge in the horizontal tube and a force transmitting portion including arm directed to the piston in the cylinder for transferring the force to a pulley rotatably mounted on the end of the arm and a cable passed through the pulley to be moved downward; a housing including a first chamber receiving the force generating device and a second chamber in which a clutch is seated; a spring portion including a spring of a clock spring type mounted on one side of the housing to enable the reel to wind the web thereon; a load limiter including the reel and a load control for cooperating with each other to control the loading applied to the web; and a pretensioner mounted between the inner surface of the spring portion and one leg portion of the U-shaped bracket to reverse-rotate the reel and then withdraw a predetermined length of the web by the force generated in a force generating apparatus, the pretensioner integrated with a pyrotechnic force generating device comprises a clutch including a circular groove portion formed around the periphery thereof to allow a predetermined length of the cable to be wound thereon, a plurality of second coupling projections each having a right-angled surface toward one direction and a slanted surface toward the other direction adjacent to around the periphery of one side surface thereof, at least three coupling groove portions cut out at one side in a right-angle and at the other side in a slant angle and a fixing groove formed to fix the other end of the cable and upper and lower stoppers respectively and integrally formed in a diametric line on the upper and lower portions of the circumference thereof to each other; a clutch portion includes at least three second coupling projectors forming a slanted surface at one side and a right-angled surface at other side for cooperating with the coupling groove portions to allow the clutch to be reversely rotated and upper and lower guiders respectively and integrally formed in a diametric line on the upper and lower inner portions of the second chamber to guide the clutch to be rotated in a winding direction; and the load limiter including a plurality of third coupling means and concaved grooves formed at the positions facing to the first coupling projectors on one side surface of the reel and the load control including a torsion bar and a disk for cooperating with the reel.

### BRIEF DESCRIPTION OF THE DRAWINGS

The invention now will be described in detail in reference to the accompanying drawings, in which:
Fig. 1 is an exploded perspective view illustrating the configuration of a seatbelt retractor including a pretension and a load limiter according to the invention;
Fig. 2 is a partly perspective view illustrating a combination of a pretensioner and a load limiter mounted in a housing according to the invention;
Figs. 3A, 3B and 3C are cross-sectional views illustrating the operating relationship of a pretensioner with a pyrotechnic force generating device according to the invention;
Figs. 4A and 4B are perspective views illustrating the upper and lower portions of a clutch constituted as a part of a pretensioner disk according to the invention; and,
Figs. 5A and 5B are cross-sectional views cut along line A-A of Figs. 3A and 3B illustrating the operating of a pretensioner according to the invention.

### DESCRIPTION OF THE INVENTION

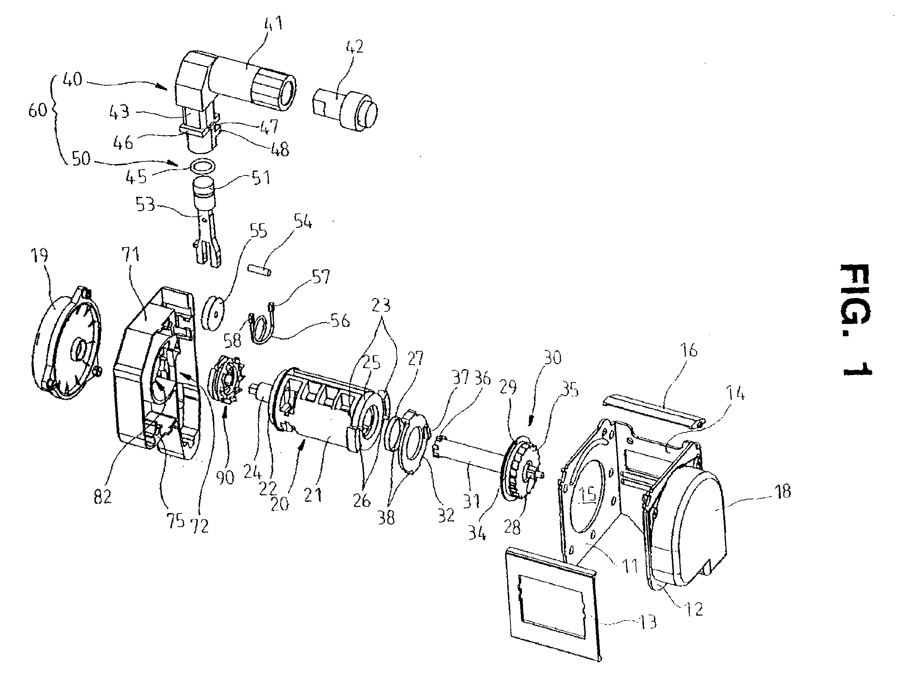

As shown in Fig. 1, a safety belt retractor 100 comprises an U-shaped bracket 10 vertically mounted on a predetermined position of a vehicle; a reel 20 ratably mounted on the U-shaped bracket 10 to allow the webbing of a web or safety belt; a load control 30 mounted to be cooperated with the reel 20 to control the excessive loading applied to the web; a locking portion 18 for restraining the reel 20 in the abnormal condition of a vehicle; a spring portion 19 mounted on the other side of the U-shaped bracket 10 with a clock type of spring encaged therein to allow the reel 20 to wind the web thereon by its elastic force; a pyrotechnic force generating device 60 including a gas or force generating portion for generating a pyrotechnic force and a force transmitting portion for transmitting the force to a pretensioner 70; and the pretensioner 70 for reverse-rotating the reel 20 to withdraw a predetermined length of the web by the force of the force generating portion.

The U-shaped bracket 10 includes left and right leg portions 11 and 112 and front and rear frames 113 and 114. On the approximate center of both leg portions 11 and 12 there are holes 15 formed to rotatably support the flanges on both ends of a reel 20. The reel 20 has a drum shaped structure 21 including a sprocket portion integrally formed on one side thereof. The bracket 10 includes a web guide 16 mounted adjacent the rear base 14.

A load limiter comprises a reel 20 configured to be in the form of a drum and a load control 30 adapted to a vehicular seatbelt retractor that is disclosed in a patent application to be filed by this applicant. The reel 20 comprises a winding portion 21 for winding the web and including a cavity, in which a receptacle groove is formed to receive one end of a torsion bar 31, a center shaft 24 integrally projected from the one side surface thereof and, left flanges 22 integrally formed on one side thereof to be positioned and rotated facing the openings 14 and stoppers 26 projected integrally on a diametrical line from the circumference of the other flange 25 thereof. On the stoppers 23, fixing pins 26 are respectively mounted at a diametrical line to each other to be positioned in a supporting groove 29.

The load control 30 includes a torsion bar 31 fitted into the winding portion 21 to be rotated with the shaft 24, a frictional disk 32 configured to control the torque of the torsion bar 31, a sprocket portion 35 having a boss (not shown) with at least one guide groove formed at its lower surface to determine the torsion degree of the torsion bar 31, to which the other end of the torsion bar 31 is coupled, and a sprocket portion 35 stretched from a flange 34 positioned to be flush with the circumferential surface of an opening in the leg portion 12. The sprocket portion 35 includes a shaft 28 projected from the center thereof and an extending portion 39 extended from the flange 34 with at least one supporting groove 39 formed around the circumference thereof.

The torsion bar 31 includes coupling portions 36 formed at both ends in the form of a tooth to be respectively coupled with another coupling portion in the cavity of the winding portion 21 and the boss 33, so that it forces the winding portion 21 to be rotated. A frictional disk 32 includes a projector 37 on its upper surface to be inserted into a guide groove 38 and guiders 38 bent downward from its circumference to be contacted with the flange 25 and positioned adjacent the stoppers 23. The bushing 27 is made of soft materials and fitted onto the outer circumferential portion of the boss 33 to reduce the friction force between the boss 33 and the inner portion of the flange 25.

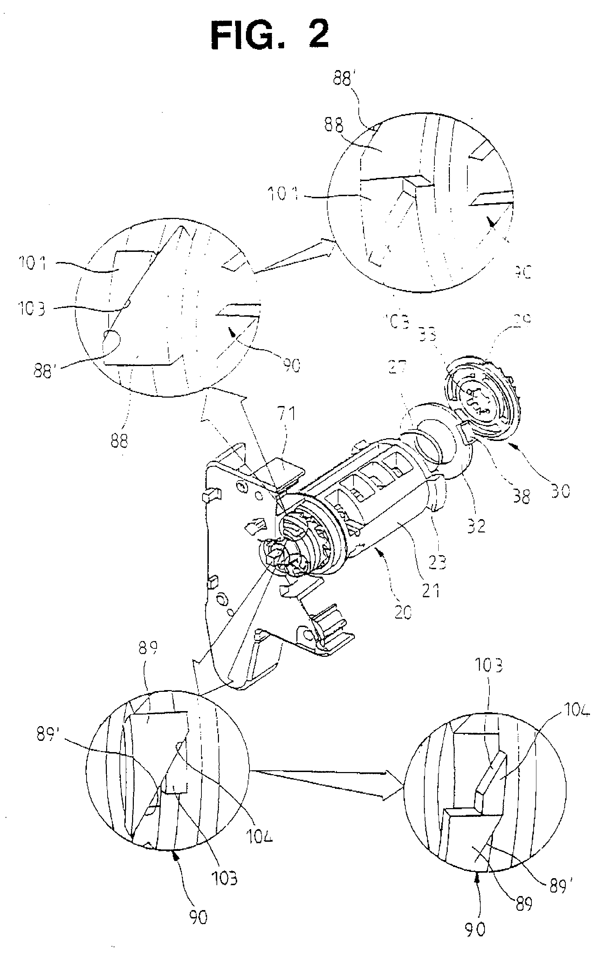

As shown in Fig. 2, the load control 30 combined with a pretensioner 70 is subject to controlling the loading applied to the web upon the webbing acceleration, in which the torsion bar 31 is inserted into the cavity of the winding portion 21, the frictional disk 31 is mounted on the front surface of the flange 25 with the guiders 38 being respectively positioned adjacent to the stoppers 23 and the projector 37 is inserted into the guide groove 37' of the boss 33 to couple a coupling portion of the boss 33 with the other end of the torsion bar 31. Therefore, at an abnormal state that an excessive web acceleration or drawing-out occurs, the load control 30 is operated under the cooperation with the pretensioner 70 with the sprocket portion 35 being suddenly locked in engagement with a locking portion 40 as described below in detail.

Referring to Fig. 1, again, a locking portion 18 may be provided with a web sensor and a vehicle sensor well-known in this technical field or disclosed by this applicant to prevent the web withdrawal or permit the freely web withdrawal in response to the webbing acceleration as well as an abnormal or rollover state of a vehicle. For example, the web sensor includes a retainer fitted onto the shaft 28 to be passed through the center adjacent the sprocket portion 35 to be operated like a pendulum and a clutch wheel received in the retainer with being coupled with a mass member to rotate the retainer upon the webbing acceleration. The vehicle sensor is constituted as a pendulum structure, which is mounted adjacent the sprocket portion 35 to cooperate its pendulum lever or its latch with the sprocket of the sprocket portion 35, thereby controlling the rotation of the reel 20.

A spring portion 18 is mounted on the left leg portion 11 with a spring being encaged in a case, one end of which is coupled with the shaft 24 to bias the web in a winding direction and wind the web around the reel 20. the case is mounted on the outer side surface of the pretensioner 70.

A conventional pyrotechnic force generating device 60 includes a force generating portion 40 and a force transmitting portion 50 to reversely rotate the reel 20 within a predetermined time period, for example 0.002 second, upon the suddenly deceleration such as a crash of a vehicle, so that it rewinds the web or safety belt, forcedly, and restrains a driver or passenger on a seat back with a tension force overcoming an inertia of the vehicle.

The pyrotechnic force generating apparatus 40 includes a horizontal tube 41 into which a propellant charge cartridge 42 including an igniter electrically connected to ECU of the vehicle is inserted. The horizontal tube 41 is coupled with a cylinder 43 to be communicated therewith, in which the cylinder 43 is vertically extended in a predetermined distance from the horizontal tube 41. The cylinder 43 includes a piston 44 inserted therein, air-tightly, by an O-shaped seal ring 55 and flanges 46 projected from both sides adjacent to the lower end portion thereof, in which the flange 46 includes a projector 47 formed thereon to be faced to the bottom surface of a first chamber 72. Besides, the cylinder 43 further includes a coupling projector 48 projected from the side surface thereof below the flange 46. Therefore, the cylinder 43 is inserted into the first chamber 72 in manner to seat the flanges 46 in coupling grooves as described below in detail.

The force generated at the pyrotechnic force-generating portion 40 is transmitted to a force-transmitting portion 50. The force transmitting portion 50 includes an arm 53 integrally connected to the piston 51, one end of which is branched; a pulley 55 rotatably mounted on the branched end of the arm 53 by a pin 54; and a cable 56 wound on a clutch disk 90 as described below passing through the pulley 55, in which the cable 56 includes first and second fixing pieces 57 and 58 formed on both ends thereof.

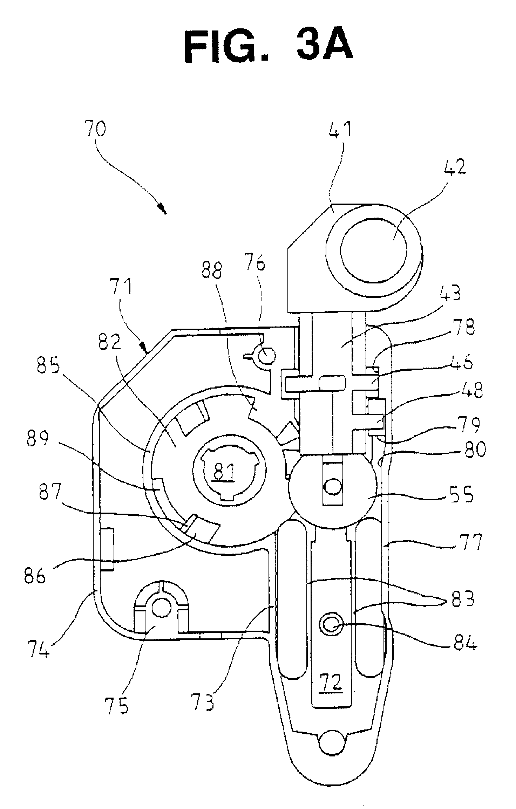

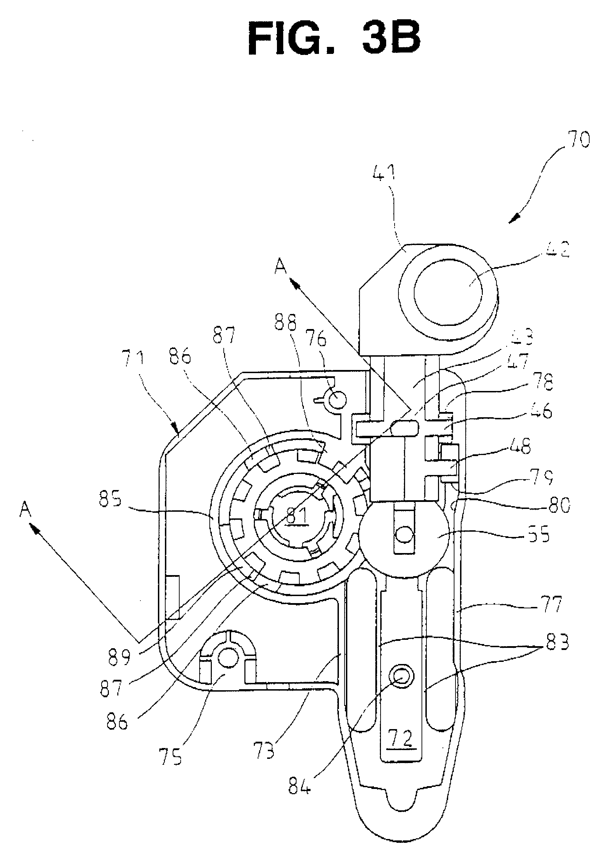

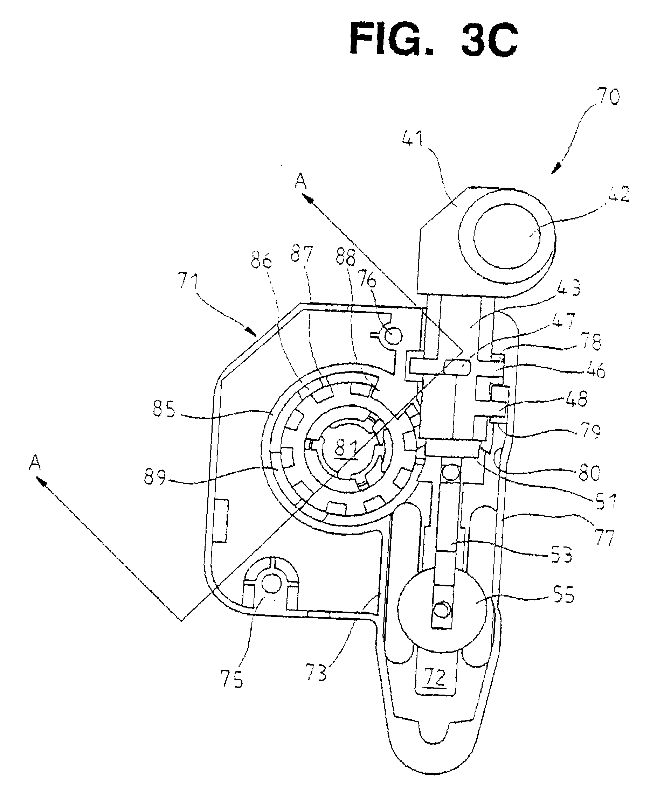

Referring to Figs. 3A, 3B and 3C, the pretensioner 70 is mounted between the left leg portion 11 of the U-shaped bracket 10 and the side surface of the spring portion 19 together with the pyrotechnic force generating device 60. The pretensioner 70 comprises a housing 71, in which the first chamber 72 is vertically formed to receive the force transmitting portion 50 and a second chamber 82 includes a first hole 81 formed at the center to pass through the reel shaft 24, which is constituted as a part of a clutching device, and a clutch device including a clutch 90. The housing 71 includes a rectangular wall portion 74 extended from an inner wall portion 73 of the first chamber 72 to surround around the second chamber 82 with being spaced in an interval therefrom. Coupling portions 75 and 76 are formed on upper and lower predetermined positions of the wall portion 74, for example the upper right and the lower left in the drawings, to be coupled to the left leg portion 11 of the bracket 10 by means of screws.

The first chamber 72 is surrounded by the inner and outer wall portions 73 and 77 on any one of left and right sides of the housing 71 and has a lengthwise portion extended by a length, adding a length slightly longer than that of the arm 51 and a length of a part coupled with the cylinder 43, and a width portion formed as a hollow to allow the pulley 55 to be moved therein, so that the force generating portion 40 and the force transmitting portion 50 are properly mounted therein. In other words, the wall portion 77 has a thickness on its upper portion subjected to position the cylinder 63 receiving a piston 51, which includes a coupling groove 78 into which the flanges 46 on both sides of the cylinder 43 are fitted, a first fixing groove 79 formed below the coupling groove 78 to allow the fixing piece 57 to be fixed therein and a guide groove 80 communicated with the first fixing groove 79 to allow the cable 56 to be inserted therein. The first chamber 71 further includes step portions 83 formed lengthwise adjacent the lower portion of the wall portions 73 and 77 in which the cylinder 43 is not received, which allow a part of the arm 53 to be guided therebetween and the pulley 55 to be placed thereon. A screw hole 84 is formed adjacent to the lower end of the wall portion 202. Also, on the lower portion of the wall portions 73 and 77 there may be at least one hole formed to avoid the backpressure in the first chamber 72 caused by the operation of the force-transmitting portion 50, which is not shown in the drawings.

Therefore, in order to mount the cylinder 43 in the first chamber 72, as the fixing piece 57 is seated in the first fixing groove 79, the flanges 46 are fitted into the coupling grooves 78. The end of the arm 53 is placed on the bottom surface below the step portions 83 to be corresponded to line A-A with the piston 52 being inserted into the cylinder 43, and the pulley 55 is positioned on the step portions 83. The cable 56 is fixed at one end to the wall portion 77 by fitting the fixing piece 57 into the first fixing groove 79, inserted into the guide groove 80 to pass through the pulley 55, wound around the clutch 90 by a predetermined turn to secure the traveling length and coupled at the other end to the clutch 90.

The second chamber 82 includes a circular wall portion 85 formed adjacent the wall portion 73 to have a hollow receiving the clutch 90. In the second chamber 82 there are three first coupling projectors 83 formed to have different arc angles, for example α, β, γ, by the reference of the center shaft 24 of the reel 20. The coupling projectors each have a right-angled surface at one side and a slant surface 87 contacting with a sliding surface of coupling groove portions as described below in detail to allow the clutch 90 to be moved in a rotational direction. In other words, the first coupling projectors 86 are escaped from the coupling groove portion to be placed on the left surface of the clutch 90. Herein, the reason that the second coupling projectors are arranged in different arc angles to one another is why the first coupling projectors 86 are staggered from the coupling groove portions not to be inserted thereinto according to the rotation of the clutch 90 by dividing the circumference angle of 360⁰, properly.

Additionally, according to the invention, the second chamber 82 further comprises upper and lower guiders 88 and 89 integrally formed at an approximately diametric line on the upper and lower portions of the wall portion 85 to guide the rotation of the clutch 90 in a web pulling direction, in which the upper guider 88 is arranged at an exit of the web wound around the clutch 90 and the lower guider 89 adjacent any one of the coupling projector 86 on the middle portion of the wall portion 85. The upper and lower guiders 88 and 89 each has slant surfaces 88' and 89' that are slanted from the top to the bottom thereof by the reference of the web pulling direction in a reverse right-angled triangle as shown in Fig. 2.

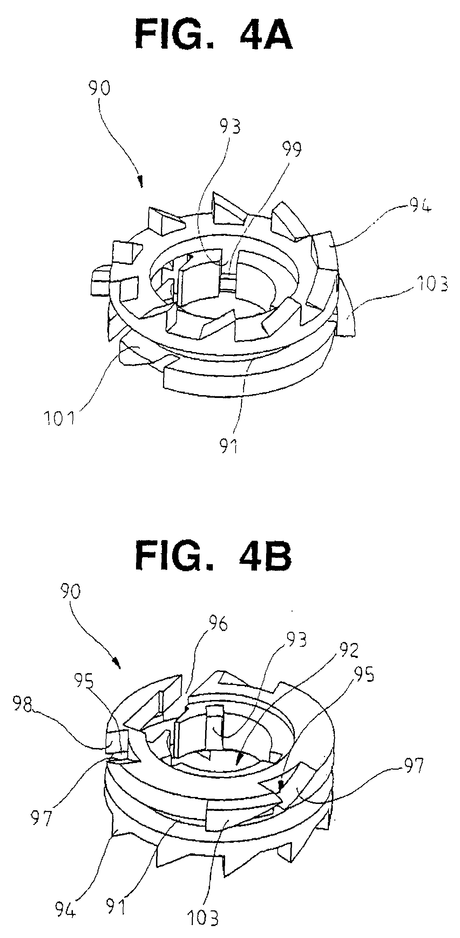

Referring to Figs. 4A and 4B, the clutch 90 includes a circular groove portion 91 formed to have a predetermined width and depth around the periphery thereof, on which the cable 56 is wound, and a hole 92 formed at the center to pass through the reel shaft 24. On the inner circumferential wall of the hole 92, there are three-guide grooves 93 formed in equidistance to each another and in an axial direction to the circular groove portion 91, in which a hanging jaw 99 is formed adjacent the bottom surface of the clutch 90 to be faced to the reel shaft 24. A plurality of second coupling projectors 94, for example 10 in the drawings, formed on the side surface facing against the reel 20, for example its upper surface, in a right angled triangle, one side of which is formed in a right angle and the other side of which is slanted. At least three coupling groove portion 95 are formed on the other side of the clutch 90, for example a surface facing against the bottom surface of the second chamber 82, one side of which is right-angled to form a stopping surface 98 contacting with the first coupling projector 83 as described below and the other side of which is slanted to form a sliding surface 97. A fixing groove portion 96 is formed adjacent any one of three coupling groove portions 95 to allow the other fixing piece 57 of the cable 56 to be fitted thereinto. Besides, according to the invention, the clutch 90 further comprises upper and lower stoppers 101 and 103 integrally projected in an approximately diametric line from the upper and lower circumference therefrom. The upper stopper 101 has a slant surface 102 slanted in a right-angled triangle from the top to the lower by the reference of the web pulling direction, in which the upper slant surface 102 is faced against the slant surface 88' of the upper guider 88. Similarly, the lower stopper 103 has a slant surface 104 slanted in a right-angled triangle from the top to the lower by the reference of the web pulling direction, in which the lower slant surface 104 is faced against the slant surface 89' of the upper guider 89.

Referring to Fig. 2 illustrating a part of the assembling configuration that the clutch 90 and the reel 20 are mounted in the housing 71, the clutch 90 is seated in the second chamber 82 with the first coupling projectors 86 being respectively positioned into the coupling groove portions 95. In this case, the stoppers 101 and 103 of the clutch 90 are positioned so that their slant surfaces 103 and 104 are faced against the slants 88' and 89' of the upper and lower guiders 88 and 89. The second coupling projectors 94 are arranged with being spaced in an interval distance from third grooves or means of the winding portion 21 having a shape contrary thereto, so that they are engaged with each another to rotate the reel 20 in a winding direction, when the clutch 90 is passed over the first coupling projectors 83 in an abnormal state of a vehicle. And, the reel shaft 24 is mounted on the circular wall portion 85 of the second chamber 82 to be passed through the first opening 81. Therefore, the assembly of the clutch device is completed.

Next, the shaft 24 projected from the housing 71 is coupled to one end of a spring in a spring portion 18 to be biased in a web winding direction. The spring portion 18 is mounted on the rear surface of the housing 71 to complete the assembly of the pretensioner 70. On the other hand, the pyrotechnic force generating device 60 is mounted on the U-shaped bracket 10 with the cylinder 43 being received in the first chamber 72 as described above, which is well known as a technology for adjusting/minimize its horizontal and vertical distances, thereby enhancing the space using efficiency of a seatbelt retractor.
Returning to Figs. 3B and 3C, the pretensioner 70 is mounted on the U-shaped bracket 110 together with the locking portion 30 to accomplish the safety belt retractor and operated as follows:

Upon the suddenly deceleration such as a crash of a vehicle, ECU generates a vehicle's abnormal state sensing signal to apply it to the igniter and detonate the propellant charge cartridge 161. At that time, the pyrotechnic force-generating device 60 generates hot high gas to move the piston 51 in the cylinder 43 in a high speed. Simultaneously, the arm 53 and the pulley 55 connected to the piston 51 are quickly moved downward to push the middle portion of the cable 56 downward. The first fixing piece 57 of the cable 56 generates the supporting force with being fitted into the fixing groove 96, and the second fixing piece 58 is pulled out in the fixing groove 96 of the clutch 90 to force the cable 56 to rotate the clutch 90, forcedly. The clutch 90 is escaped from the first coupling projectors 86 of the second chamber 82 with being slid along the slant surface 87 of its coupling groove 95 thereby to be rotated.

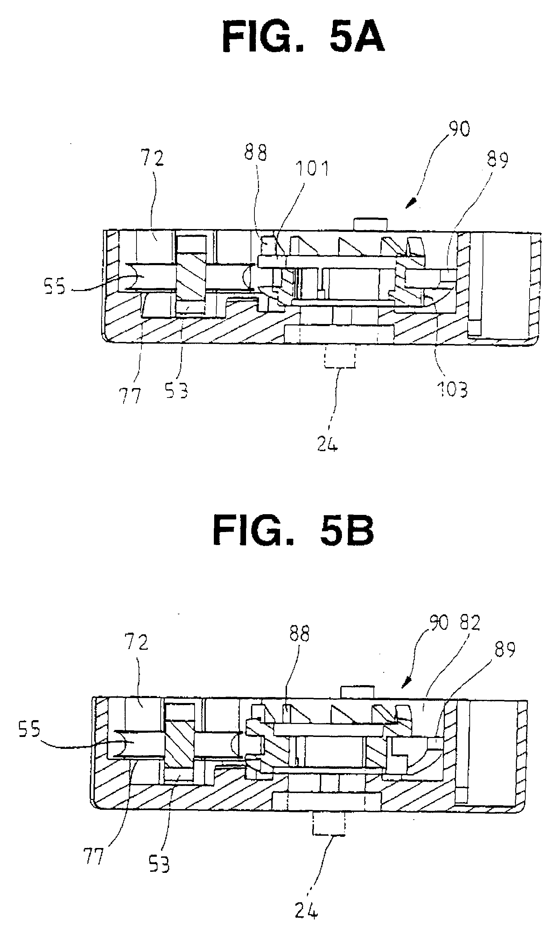

Simultaneously, as shown in Fig. 2 and Figs. 5A and 5B, the upper and lower stoppers 101 and 103 are respectively escaped out of the upper and lower guiders 88 and 89 with their slant surfaces 102 and 104 being slid along the slant surfaces 88' and 89' to force the clutch 90 to be ridden over the first coupling projectors 86 to be rotated in a web unwinding or pulling direction. Thereafter, the clutch 90 stops its rotation upon the contacting of each of the rear surfaces of the upper and lower stoppers 101 and 103 with those of the upper and lower guiders 88 and 89, which means the operating of the pretensioner 70 had been terminated.

Next, under the state that the clutch 90 is placed on the higher position of the first coupling projectors 86, the second coupling projectors 94 are engaged with the third groove portions or means of the reel 20. Therefore, the reel 20 is rotated in opposite to the withdrawal of the web to perform the webbing. Under the abnormal condition of the vehicle, the webbing rewinds the web on the reel 20 by a predetermined length, for example about 20cm. Such like rewound web keeps a passenger or driver to be stuck to a seat back, thereby protecting the passenger.

Additionally, according to the invention, the load control 30 begins to be operated. The excessive releasing force of the web forcedly rotates the winding portion 21 in an unwinding direction with the sprocket portion 35 being stopped. The fixing pin 26 positioned in the supporting groove 29 is broken down. As a friction between the frictional disk 32 and one surface of the winding portion 21 occurs, the projector 37 is rotated along the traveling path in the guide groove of the sprocket portion 35. Each of the guiders 38 reaches the other surface of the stoppers 23. Herein, it is noted that the torsion bar 31 is twisted to the level of its property to absorb/adjust the sudden increased loading applied to the web together with the frictional disk 32.

During the operating of the load limiter, the clutch 90 is again rotated in a web releasing direction with the second coupling projectors 95 being engaged with the third coupling means. The first coupling protectors 86 is again engaged with the coupling groove portion 95, while the upper and lower stoppers 101 and 103 return to their normal positions below the lower portion of the upper and lower guiders 88 and 89 so that the slant surfaces 102 and 104 are again respectively faced to the other slant surfaces 88' and 89'. Herein, it is noted that the torsion bar 31 can absorb and adjust the sudden increased loading together with the disk 32, thereby enabling the load limiter to enhance the safety of occupant in a vehicle.

### Acting effect of the invention

As described above, the invention comprises a pretensioner for efficiently using a force generated at a pyrotechnic force generating device and cooperating with a load limiter to accomplish at least two countermeasures for the safety of occupants.

Since the invention may be embodied in various forms, without departing from the essential characteristics thereof, it should be understood that the above-described embodiment is not to be limited by any of the details of the foregoing description, unless otherwise specified, but should be construed only as defined in the appended claims.

## Claims

1. A seatbelt retractor comprising a reel rotatably mounted on an U-shaped bracket to perform the webbing operating of a web; a locking portion for restraining the rotating of the reel cooperating with latches formed on one side of the reel in an abnormal status of a vehicle; a pyrotechnic force generating means including a force generating portion for moving a piston downward in a cylinder vertically extended from one side of a horizontal tube with a force generated upon the explosion of a propellant charged cartridge in the horizontal tube and a force transmitting portion including arm directed to the piston in the cylinder for transferring the force to a pulley rotatably mounted on the end of the arm and a cable passed through the pulley to be moved downward; a housing including a first chamber receiving the force generating device and a second chamber in which a clutch is seated; a spring portion including a spring of a clock spring type mounted on one side of the housing to enable the reel to wind the web thereon; a load limiter including the reel and a load control for cooperating with each other to control the loading applied to the web; and a pretensioner mounted between the inner surface of the spring portion and one leg portion of the U-shaped bracket to reverse-rotate the reel and then withdraw a predetermined length of the web by the force generated in a force generating apparatus, the pretensioner integrated with a pyrotechnic force generating device comprising:
a clutch including a circular groove portion formed around the periphery thereof to allow a predetermined length of the cable to be wound thereon, a plurality of second coupling projections each having a right-angled surface toward one direction and a slanted surface toward the other direction adjacent to around the periphery of one side surface thereof, at least three coupling groove portions cut out at one side in a right-angle and at the other side in a slant angle and a fixing groove formed to fix the other end of the cable and upper and lower stoppers respectively and integrally formed in a diametric line on the upper and lower portions of the circumference thereof to each other;
a clutch portion includes at least three second coupling projectors forming a slanted surface at one side and a right-angled surface at other side for cooperating with the coupling groove portions to allow the clutch to be reversely rotated and upper and lower guiders respectively and integrally formed in a diametric line on the upper and lower inner portions of the second chamber to guide the clutch to be rotated in a winding direction; and
the load limiter including a plurality of third coupling means and concaved grooves formed at the positions facing to the first coupling projectors on one side surface of the reel and the load control including a torsion bar and a disk for cooperating with the reel.

2. The pretensioner of the seatbelt retractor according to Claim 1, in which:
the upper and lower stoppers have a slant surface slanted from the top to the lower by the reference of a web winding direction.

3. The pretensioner of the seatbelt retractor according to Claim 1, in which:
the upper and lower guiders have a slant surface slanted from the top to the lower by the reference of a web winding direction to be faced to the slant surface of the stoppers.

4. The pretensioner of the seatbelt retractor according to Claim 1, in which:
the first coupling projectors are engaged with the third coupling means to control the loading applied to the web,

5. The pretensioner of the seatbelt retractor according to Claim 1, in which:
the cylinder includes a coupling projector formed on one side thereof to support one fixing piece of the cable.
